# EUROPÄISCHE PATENTANMELDUNG

(11) **EP 3 297 138 A1**
(43) Veröffentlichungstag der Anmeldung: **21.03.2018**
(21) Anmeldenummer: 16189494.4
(22) Anmeldetag: 19.09.2016
(51) Int. Cl.: H02K 9/19

(54) **VERFAHREN ZUM BETREIBEN EINES ELEKTRISCHEN GENERATORS**

(71) Anmelder: Siemens Aktiengesellschaft, 80333 München (DE)
(72) Erfinder: Baca, Matthias, 44534 Lünen (DE); Evenkamp, Monja, 45128 Essen (DE); Gertz, Simon, 40229 Düsseldorf (DE); Grünewald, Dominik, 45479 Mülheim an der Ruhr (DE); Kowalski, Matthias, 45478 Mülheim an der Ruhr (DE); Mölders, Markus, 45472 Mülheim an der Ruhr (DE)

(57) **Zusammenfassung**

Die Erfindung betrifft ein Verfahren zum Betreiben eines elektrischen Generators oder eines Phasenschiebers, wobei die Ständerwicklung mit Kühlwasser durchströmt wird und eine Pumpe zum Pumpen des Kühlwassers verwendet wird, wobei mit einer Regelungseinheit, die als Regelgröße die Wasseraustrittstemperatur verwendet, die Pumpendrehzahl geregelt wird.

## Beschreibung

Die Erfindung betrifft eine Anlage umfassend eine elektrodynamische Maschine, insbesondere einen Turbogenerator oder einen Phasenschieber, wobei die elektrodynamische Maschine eine Ständerwicklung und eine Rotorwicklung aufweist, wobei die Ständerwicklung Kühlleitungen zum Durchströmen mit Kühlwasser aufweist, weiter umfassend eine Pumpe zum Pumpen des Kühlwassers.

Desweiteren betrifft die Erfindung ein Verfahren zum Betreiben eines elektrischen Generators oder eines Phasenschiebers, wobei die Ständerwicklung mit Kühlwasser durchströmt wird und eine Pumpe zum Pumpen des Kühlwassers verwendet wird.

Elektrische Generatoren werden zur Energieerzeugung eingesetzt. Derzeit besteht der Trend zunehmend erneuerbare Energien zu verwenden. Allerdings ergibt sich beim Einsatz der erneuerbaren Energien das Problem, dass die Wirtschaftlichkeit von Erzeugungsanlagen in diesem Bereich stark vom Standort der Anlage abhängt, wie beispielsweise bei Offshore-Windanlagen. Dadurch ergibt sich das Problem, dass die elektrische Energie über weite Distanzen transportiert werden muss. Im Hoch- und Höchstspannungsnetz wird Blindleistung benötigt, um die Stabilität des Netzes beim Transport der elektrischen Energie zu gewährleisten. Generatoren in konventionellen thermischen Kraftwerken können diese Blindleistung quasi als Nebenprodukt zur Verfügung stellen. Allerdings entsteht hier das Problem, dass durch den Abbau der konventionellen Kraftwerkskapazitäten Engpässe in der Blindleistungserzeugung entstehen.

Abhilfe könnte hier geschaffen werden, indem leistungselektronische Einrichtungen zur Verfügung gestellt werden, welche über Kondensatorbänke die entsprechende Blindleistung zur Verfügung stellen. Allerdings sind diese durch die fehlende rotierende Masse nur bedingt der Netzstabilität zuträglich. Außerdem können diese nur kapazitive Blindleistungen zur Verfügung stellen.

Es werden daher Phasenschieber eingesetzt, mit denen kapazitive wie auch induktive Blindleistung zur Verfügung gestellt werden kann, wobei hier durch die rotierende Masse zusätzlich das Netz unterstützt wird. Da ein Phasenschieber allerdings keine Wirkleistung umsetzt, sind keine Einnahmen mit solch einer Maschine zu erzielen. Der Leistungsbedarf eines Phasenschiebers trägt damit unmittelbar zu den Betriebskosten und der Wirtschaftlichkeit bei. Daher sollten die Betriebskosten eines Phasenschiebers minimiert werden.

Aufgabe der Erfindung ist es daher, einen Turbogenerator oder Phasenschieber derart weiterzubilden, dass die Betriebskosten verringert sind.

Gelöst wird diese Aufgabe durch eine Anlage umfassend eine elektrodynamische Maschine, insbesondere einen Turbogenerator oder einen Phasenschieber, wobei die elektrodynamische Maschine eine Ständerwicklung und eine Rotorwicklung aufweist, wobei die Ständerwicklung Kühlleitungen zum Durchströmen mit Kühlwasser aufweist, weiter umfassend eine Pumpe zum Pumpen des Kühlwassers, wobei eine Regelungseinheit, wobei die Regelungseinheit mit einer Regelgröße, die Rückschlüsse auf die thermischen Bedingungen der elektrodynamischen Maschine zulassen, die Pumpendrehzahl regelt.

Die Erfindung hat erkannt, dass die Verlustwärme in der Ständerwicklung in vergleichsweise großen Turbogeneratoren oder Phasenschiebern im Bereich der Ständerwicklung häufig durch eine direkte Wasserkühlung der Wicklungsstäbe angeführt wird. Dabei wird in solchen Systemen üblicherweise die Kühlwassereintrittstemperatur geregelt und die Pumpen für das Kühlwasser laufen mit ihrer Nennleistung. Dadurch werden je nach Betriebszustand unnötig hohe Verluste in der Gesamtanlage verursacht. Erfindungsgemäß wird nunmehr die Pumpe zum Pumpen des Kühlwassers dahingehend anders betrieben, dass nunmehr eine Regelungseinheit vorgeschaltet wird, wobei die Regelungseinheit mit einer Regelgröße, die Rückschlüsse auf die thermische Bedingungen der thermodynamischen Maschine zulassen, die Pumpendrehzahl regelt.

Die Pumpen werden somit nicht mehr bei Nennleistung betrieben, sondern werden je nach Bedarf bei niedrigeren Leistungen betrieben, was zu einer besseren Wirtschaftlichkeit der Gesamtanlage führt.

Vorteilhafte Weiterbildungen sind in den Unteransprüchen angegeben.

In einer ersten vorteilhaften Weiterbildung wird die Pumpe mit einem Frequenzumrichter betrieben. In dem Frequenzumrichter kann die Drehzahl und die aufgenommene Leistung reduziert werden. In einer weiteren vorteilhaften Weiterbildung wird die Regelungseinheit derart ausgebildet, dass die Pumpendrehzahl derart geregelt wird, dass die Leistungsaufnahme der Pumpe minimiert ist.

In einer vorteilhaften Weiterbildung wird in der Regelungseinheit als Regelgröße folgende Größe verwendet:
Wasseraustrittstemperatur,
Kaltgastemperatur,
Wassergastemperatur,
Strom in der Ständerwicklung,
Strom in der Läuferwicklung,
Blindleistung und/oder
Wirkleistung.

Mit diesen Regelgrößen ist eine bessere Reglung der Pumpe möglich.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele.

In einem Ausführungsbeispiel der Erfindung (ohne Zeichnung) umfasst die erfindungsgemäße Anlage eine elektrodynamische Maschine, die als Turbogenerator oder als Phasenschieber ausgebildet ist, eine Ständerwicklung und eine Rotorwicklung. Die Rotorwicklung wird im Betrieb mit einem elektrischen Strom durchströmt, der zu einem magnetischen Feld führt, das zeitlich veränderbar ist. Dieses magnetische Feld induziert in der Ständerwicklung eine elektrische Spannung. Im Betrieb fließen dabei durch die Ständerwicklung und die Rotorwicklung solch hohe Ströme, dass diese gekühlt werden müssen. Die Ständerwicklung wird mit Kühlwasser gekühlt und weist dafür Kühlleitungen zum Durchströmen mit Kühlwasser auf. Desweiteren umfasst die Anlage eine Pumpe zum Pumpen des Kühlwassers. Die Pumpe wird hierbei derart betrieben, dass eine Regelungseinheit vorgeschaltet wird, die die Pumpendrehzahl regelt. Die Pumpendrehzahl wird demnach in Abhängigkeit einer Regelgröße geregelt. In einer ersten Ausführungsform wird hierbei die Wasseraustrittstemperatur als Regelgröße genommen. Die Wasseraustrittstemperatur ist die Temperatur des Kühlwassers, das unmittelbar nach einer Kühleinheit ausströmt.

Die Regelungseinheit wird hierbei mit einer Regelgröße geregelt, die Rückschlüsse auf die thermischen Bedingungen der elektrodynamischen Maschine zulassen. Weitere Größen, die Rückschlüsse auf die thermischen Bedingungen der elektrodynamischen Maschine zulassen sind die Kaltgastemperatur, die Warmgastemperatur, der Strom in der Ständerwicklung, der Strom in der Läuferwicklung, die Blindleistung und/oder die Wirkleistung. Sofern die Regelungseinheit der vorgenannten Größen ausgebildet ist, ist eine Regelung der Pumpendrehzahl möglich, die zu einer besseren wirtschaftlichen Betriebsweise der Anlage führt. Die Pumpe kann hierbei mit einem Frequenzumrichter betrieben werden. Die Regelungseinheit regelt die Pumpendrehzahl derart, dass die Leistungsaufnahme der Pumpe minimiert ist.

## Patentansprüche

1. Anlage umfassend
eine elektrodynamische Maschine, insbesondere einen Turbogenerator,
wobei die elektrodynamische Maschine eine Ständerwicklung und eine Rotorwicklung aufweist,
wobei die Ständerwicklung Kühlleitungen zum Durchströmen mit Kühlwasser aufweist,
weiter umfassend eine Pumpe zum Pumpen des Kühlwassers, **gekennzeichnet durch**
eine Regelungseinheit, wobei die Regelungseinheit mit einer Regelgröße, die Rückschlüsse auf die thermischen Bedingungen der elektrodynamischen Maschine zulassen, die Pumpendrehzahl regelt.

2. Anlage nach Anspruch 1,
wobei die elektrodynamische Maschine ein Phasenschieber ist.

3. Anlage nach Anspruch 1 oder 2,
wobei die Pumpe mit einem Frequenzumrichter betrieben wird.

4. Anlage nach einem der vorhergehenden Ansprüche,
wobei die Regelungseinheit derart die Pumpendrehzahl regelt, dass die Leistungsaufnahme der Pumpe minimiert wird.

5. Anlage nach einem der vorhergehenden Ansprüche,
wobei in der Regelungseinheit als Regelgröße folgende Größen verwendet werden:
- Wasseraustrittstemperatur
- Kaltgastemperatur
- Wassergastemperatur
- Strom in der Ständerwicklung
- Strom in der Läuferwicklung,
- Blindleistung
- Wirkleistung.

6. Verfahren zum Betrieben eines elektrischen Generators oder eines Phasenschiebers,
wobei die Ständerwicklung mit Kühlwasser durchströmt wird und die Pumpe zum Pumpen des Kühlwassers verwendet wird, **dadurch gekennzeichnet, dass**
der Volumenstrom des Kühlwassers an Hand einer Regelgröße reduziert wird, wobei als Regelgröße eine der folgenden Größen verwendet wird:
- Wasseraustrittstemperatur
- Kaltgastemperatur
- Wassergastemperatur
- Strom in der Ständerwicklung
- Strom in der Läuferwicklung,
- Blindleistung
- Wirkleistung.
